(19) Europäisches Patentamt
European Patent Office
Office européen des brevets

(11) **EP 2 343 620 B1**

(12) **EUROPEAN PATENT SPECIFICATION**

(45) Date of publication and mention of the grant of the patent:
**20.07.2016 Bulletin 2016/29**

(51) Int Cl.:
*H02M 1/00* *(2006.01)*    *G05F 1/30* *(2006.01)*
*G05F 1/14* *(2006.01)*    *H02M 1/32* *(2007.01)*
*H02M 5/293* *(2006.01)*

(21) Application number: **09814841.4**

(22) Date of filing: **31.08.2009**

(86) International application number:
**PCT/RU2009/000441**

(87) International publication number:
**WO 2010/033053 (25.03.2010 Gazette 2010/12)**

(54) **ALTERNATING VOLTAGE STABILISER WITH PROTECTION ELEMENTS (EMBODIMENTS)**

WECHSELSPANNUNGSSTABILISATOR MIT SCHUTZELEMENTEN (VERSCHIEDENE AUSFÜHRUNGEN)

STABILISATEUR DE TENSION ALTERNATIVE DOTÉ D ÉLÉMENTS DE PROTECTION (ET VARIANTES)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.09.2008 RU 2008136842**

(43) Date of publication of application:
**13.07.2011 Bulletin 2011/28**

(73) Proprietor: **OOO "AVEK"**
**Novosibirsk 630049 (RU)**

(72) Inventors:
• **LEVINZON, Sulejman Vladimirovich**
**248016 Kaluga (RU)**
• **KOSOY, Petr Lvovich**
**249032 Obninsk (RU)**
• **KLAVSUTS, Irina Lvovna**
**630005 Novosibirsk (RU)**
• **SEREGINA , Alla Anatoljevna**
**142640 Kurovskoe (RU)**
• **FEYGIN, Igor Lvovich**
**630089 Novosibirsk (RU)**

(74) Representative: **Sloboshanin, Sergej**
**V. Füner, Ebbinghaus, Finck, Hano**
**Mariahilfplatz 3**
**81541 München (DE)**

(56) References cited:
**DE-A1- 3 511 182        GB-A- 1 300 229**
**SU-A1- 1 051 510        US-A- 3 449 634**
**US-A- 4 774 451         US-A- 5 266 838**
**US-A1- 2007 296 390**

## Description

FIELD OF THE INVENTION

This invention is in the field of electrical engineering and relates to automatic AC-to-AC conversion systems designed to convert incoming AC power to desired outgoing power, for example for changing the voltage, frequency or number of phases, and is more particularly directed to automatic systems in which deviations of an electrical quantity from one or more predetermined values detected at the system output are fed back to a device within the system to restore the detected quantity to its predetermined value or values, i.e. feedback system, and it can be used in electrical networks or similar power systems of residential and public buildings, in power-supply systems of electrical equipment, lighting networks, communication systems, automatics and telemechanics for optimization of the performance of electrical equipment and energy saving.

BACKGROUND OF THE INVENTION

The AC voltage regulation is required in the electric power supply, automatics, AC drives and many other electronic devices. For this purpose, it has been usual to employ transductor amplifiers, multiple-winding transformers with thyristor switching of windings, different thyristor circuits able to change the effective voltage due to distortion of a sine wave. The above devices normally have relatively heavy weight and large size, fail to provide the required range of the voltage regulation or distort the sine-wave voltage.

In this case, an important parameter influencing the efficiency of AC voltage regulating devices is the availability of power recuperation under a reactive load. Power recuperation is made possible with a galvanic coupling between a power source and a consumer. However, none of the transformer circuits of the AC voltage regulating devices provide recuperation.

To regulate an AC voltage at a load, motor-driven autotransformers are also used. Autotransformers ensure power recuperation under a complex load, and yet such devices are relatively heavy and large-sized, they are expensive and have slow response speed.

For stabilization and control of the above-mentioned electric power parameters in three-phase electrical networks of different-purpose receivers, it is well known in the art to use the method of mechanical switchover of regulating winding taps of the feed transformer (Yu.D.Zhouravin, M.Ya.Mintsis, and I.I.Mouzychenko. Power Supply of Aluminum-Electrolysis Rooms. Novokuznetsk. Siberian State University, 2000, pp.46-47).

Stabilization circuits employed to implement said method have many disadvantages the major of which are rapid electric wear of contacts, slow response speed and inability of a multistage regulation of voltage at the output terminals of the feed transformer. The latter gives no way for stabilization of the loop current in the aluminum potline to an accuracy of $\pm 1$ %, as it is required by the technology of aluminum production.

A prior art AC voltage regulator disclosed in RU Patent No. 2100837, Cl. G05F 1/30, H02M 5/12, 1996 comprises a transformer the primary winding of which is connected via a switching unit to the outputs for connecting an input voltage, while the transformer secondary winding is connected between the outputs for connecting an input voltage and the load leads. The switching unit of said regulator includes two pairs of switching elements, each being composed of a normally-closed (NC) contact and a normally-open (NO) contact. The voltage regulator further comprises four bridge circuits, a control transformer, a power switch, a control switch, a separating capacitor, and a compare and control device.

The major drawbacks of the voltage regulator of that type are the presence of a high-powered switch key, an additional control transformer and substantial commutation currents in operation, which has an adverse effect on both the reliability of the switching elements and electromagnetic compatibility of the device on the whole. One further drawback is the availability of a linear-key mode. Moreover, there are no protection devices.

A further prior art AC voltage regulator disclosed in RU Patent No.2158954, Cl. G05F 1/30, H02M 5/12, 1999 comprises a transformer, the primary winding of which is connected via a switching unit composed of switching elements to the outputs for connecting an input voltage, while the secondary winding is connected into the load circuit, and also, there is a compare and control device. The switching unit in the said voltage regulator is made as a NC contact and a NO contact, the primary winding of the transformer is directly and via the NC contact connected in parallel with the secondary winding, the NO contact of the third slave relay is connected in parallel with a limiting resistor connected between a neutral conductor and the NO contact, a capacitor is connected in parallel with the primary winding of the said transformer, the compare and control device is made as a monitoring and control circuit monitoring an increase or drop in the voltage at the load with respect to the preset level.

The disadvantage of such a device is the absence of protection units and imperfect control circuit.

A still further prior art multistage AC voltage regulator disclosed in RU Patent No. 2237270, Cl. G05F 1/30, H02M 5/12, 2003 is made as series-connected n-cascades, each comprising a regulating unit, which includes a transformer, a switching unit in the form of a pair of NC and NO contacts connected in series, a bridging capacitor and an output capacitor, and two RC circuits, as well as a control and switching unit, the primary winding of the transformer being connected to the input and output of the regulating unit, and the secondary winding being connected into the load circuit so that the first analogous ends of the primary and secondary windings are connected to the phase and neutral conductors of the mains and directly into the load circuit, respectively, while the second ends of the windings are interconnected via the NC contact of the switching unit, the NO contact is connected to the point of connection between the second end of the primary winding and the NC contact, the bridging capacitor is connected in parallel with the primary winding of the transformer, and the corresponding RC circuit is connected in parallel with each contact of the switching element, the control and switching unit being made as 2n-circuits of switching control monitoring an increase and drop in the voltage at the load with respect to the preset level, and the output capacitor being connected in parallel with the load in output of the last regulating unit of the cascade.

The major drawback of such a device is non-availability of any service functions and complexity of the control system.

A further prior art device which is the most similar to that in accordance with the present invention is an AC voltage regulator disclosed in US Patent Application Publication US 2007/0296390 A1, comprising a regulating unit which includes a transformer, a switching unit in the form of two switching elements, each of which is made as a pair of series-connected NC and NO contacts, a bridging capacitor and an output capacitor, and four RC circuits, as well as a control and switching unit, the primary winding of the transformer being connected via the switching unit to the input and output of the regulating unit, while the secondary winding being connected into the load circuit, moreover, the primary winding being connected in parallel with the secondary winding by the opposite ends via NC contacts of the switching elements, likewise, the bridging capacitor being connected in parallel with the transformer primary winding, and the RC circuit being connected in parallel with each contact of the switching elements, the output capacitor being connected in parallel with the load.

The drawback of such a device is non-availability of some service functions, such as remote control capability, the capability to connect the load by-passing around the voltage regulator in the event of its failure.

Moreover, no protection of the transformer primary winding and contact circuits switching the primary winding is provided against overcurrent, for example when the contacts are welded together. The input circuit-breaker has a current rating 15-20 times as large as that of the transformer primary winding and fails to provide protection of the above-mentioned circuits.

## SUMMARY OF THE INVENTION

An object of the present invention is to enhance the operational reliability of previously known voltage regulators by making it possible to connect a load by-passing around a voltage regulator in the event of its failure, by providing overcurrent protection of the transformer primary winding, and to improve some units.

This object is accomplished by an AC voltage regulator according to claim 1.

For the purpose of additional information, this object can also be achieved if in an AC voltage regulator with protection components comprising a regulating unit which includes a transformer, a switching unit in the form of series-connected NC and NO contacts, a bridging capacitor and an output capacitor, and two RC circuits, as well as a control and switching unit, the primary winding of the transformer being connected to the mains phase and neutral conductors, and the secondary winding being connected into the load circuit so that the first analogous ends of the primary and secondary windings are connected to the mains phase and neutral conductors and directly into the load circuit, respectively, while the second ends of the windings are interconnected via the NC contact of the switching unit, the NO contact is connected to the point of connection of the second end of the primary winding and the NC contact, the bridging capacitor is connected in parallel with the primary winding of the transformer, and the corresponding RC circuit is connected in parallel with each contact of the switching element, the output capacitor being connected in parallel with the load, a double-pole power circuit-breaker with a shunt release is inserted, having its first and second contacts connected into the load circuit in series at the input and output of the regulating unit between the mains phase conductor and the input of the regulating unit, and between the load and the output of the said unit, moreover, an additional unit of protection of the regulating unit is inserted, which is connected by the input to the point of connection of the first contact of the double-pole circuit-breaker and the input of the regulating unit, and by the output - to the mains neutral conductor, the second and third contacts of the triple-pole circuit-breaker of the additional protection unit being connected between the neutral conductor and the NO contact output, which is not coupled to the NC contact, and between the output of the primary winding of the transformer and the point of connection of the NO and NC contacts of the switching element, the first analogous ends of the transformer windings being connected to the output of the regulating unit.

For the purpose of additional information, the same object can be attained if in an AC voltage regulator with protection components comprising a regulating unit which includes a transformer, a switching unit in the form of series-connected NC and NO contacts, a bridging capacitor and an output capacitor, and two RC circuits, as well as a control and switching unit, the primary winding of the transformer being connected to the mains phase and neutral conductors, and the secondary winding being connected into the load circuit so that the first analogous ends of the primary and secondary windings are connected to the mains phase and neutral conductors and directly into the load circuit, respectively, while the second ends of the windings are interconnected via the NC contact of the switching unit, the NO contact is connected to the point of connection between the second end of the primary winding and the NC contact, the bridging capacitor is connected in parallel with the primary winding of the transformer, and the corresponding RC circuit is connected in parallel with each contact of the switching element, the output capacitor being connected in parallel with the load, a double-pole power circuit-breaker with a shunt release is inserted, having its first and second contacts connected into the load circuit in series at the input and output of the regulating unit, between the mains phase conductor and the input of the regulating unit, and between the load and the output of the said unit, moreover, an additional unit of protection of the regulating unit is inserted, which is connected by the input to the point of connection of the first contact of the double-pole power circuit-breaker and the input of the regulating unit, and by the output - to the mains neutral conductor, the second and third contacts of the triple-pole circuit-breaker of the additional protection unit being connected between the neutral conductor and the NO contact output, which is not coupled to the NC contact, and between the output of the primary winding of the transformer and the point of connection of the NO and NC contacts of the switching unit, the first analogous ends of the transformer windings being connected to the input of the regulating unit.

For the purpose of additional information, the same object can also be accomplished if in an AC voltage regulator with protection components made as series-connected n-cascades, each comprising a regulating unit which includes a transformer, a switching unit in the form of two switching elements each of which is made as a pair of series-connected NC and NO contacts, a bridging capacitor and an output capacitor, and four RC circuits, as well as a control and switching unit, the primary winding of the transformer being connected via the switching unit to the input and output of the regulating unit, while the secondary winding being connected into the load circuit, moreover, the primary winding being connected in parallel with the secondary winding by the opposite ends via NC contacts of the switching elements, likewise, the bridging capacitor being connected in parallel with the primary winding of the transformer, the NO contacts of each switching element being interconnected, the opposite ends of the windings being connected via the NC contacts of each switching element, the control and switching unit being in the form of 2n-circuits of switching control monitoring an increase and drop in the voltage at the load with respect to the preset level, and the RC circuit being connected in parallel with each contact of the switching elements, the output capacitor being connected in parallel with the load in output of the last cascade, a double-pole power circuit-breaker with a shunt release is inserted into each cascade, having its first and second contacts series-connected into the load circuit at the input and output of the regulating unit between the mains phase conductor and the input of the said unit in the first cascade, and in the rest of the cascades - between the output of the preceding cascade and the input of the regulating unit, and between the load and the output of its cascade, moreover, an additional protection unit is inserted into each cascade, which is connected by the input to the point of connection of the first double-pole power circuit- breaker and the input of the regulating unit, and by the output - to the mains neutral conductor, the additional protection unit having the first, second and third contacts of the triple-pole circuit-breaker connected between the neutral conductor and the common point of connection of the NO contacts of both switching elements, and between the output end of the primary winding of the transformer and the point of connection of the pair of NO and NC contacts of the second switching element.

For the purpose of additional information, the above object will be attained if in an AC voltage regulator with protection components made as series-connected n-cascades, each comprising a regulating unit which includes a transformer, a switching unit in the form of series-connected NC and NO contacts, a bridging capacitor and an output capacitor, and two RC circuits, as well as a control and switching unit, the primary winding of the transformer being connected to the input and output of the regulating unit, and the secondary winding being connected into the load circuit so that the first analogous ends of the primary and secondary windings are connected to the mains phase and neutral conductors and directly into the load circuit, respectively, while the second ends of the windings are interconnected via the NC contact of the switching unit, the NO contact is connected to the point of connection of the second end of the primary winding and the NC contact, the bridging capacitor is connected in parallel with the primary winding of the transformer, and the corresponding RC-circuit is connected in parallel with each contact of the switching element, the control and switching unit being in the form of 2n-circuits of switching control monitoring an increase and drop in the voltage at the load with respect to the preset level, and the output capacitor being connected in parallel with the load in output of the last regulating unit of the cascade, a double-pole power circuit-breaker with a shunt release is inserted into each cascade, having its first and second contacts connected into the load circuit in series at the input and output of the regulating unit, between the mains phase conductor and the input of the said unit in the first cascade, and in the rest of the cascades - between the output of the preceding cascade and the input of the regulating unit, and between the load and the output of its cascade, moreover, an additional unit of protection of the regulating unit is inserted into each cascade, which is connected by the input to the point of connection of the first contact of the double-pole circuit-breaker and the input of the regulating unit, and by the output - to the mains neutral conductor, the second and third contacts of the triple-pole circuit-breaker of the additional protection unit being connected between the neutral conductor and the NO contact output, which is not coupled to the NC contact, and between the end of the primary winding of the transformer and the point of connection of the NO and NC contacts of the switching element, the first analogous ends of the transformer windings being connected to the output of the regulating unit.

For the purpose of additional information, the same object will be accomplished if in an AC voltage regulator with protection components made as series-connected n-cascades, each comprising a regulating unit, which includes a transformer, a switching unit in the form of series-connected NC and NO contacts, a bridging capacitor and an output capacitor, and two RC circuits, as well as a control and switching unit, the primary winding of the transformer being connected to the mains phase and neutral conductors, and the secondary winding being connected into the load circuit so that the first analogous ends of the primary and secondary windings are connected to the mains phase and neutral conductors and directly into the load circuit, respectively, while the second ends of the windings are interconnected via the NC contact of the switching unit, the NO contact is connected to the point of connection of the second end of the primary winding and the NC contact, the bridging capacitor is connected in parallel with the primary winding of the transformer, and the corresponding RC-circuit is connected in parallel with each contact of the switching element, the control and switching unit being in the form of 2n-circuits of switching control monitoring an increase and drop in the voltage at the load with respect to the preset level, and the output capacitor being connected in parallel with the load in output of the last regulating unit of the cascade, a double-pole power circuit-breaker with a shunt release is inserted, having its first and second contacts connected into the load circuit in series at the input and output of the regulating unit, between the mains phase conductor and the input of the regulating unit, and between the load and the output of the said unit, furthermore, an additional unit of protection of the regulating unit is inserted which is connected by the input to the point of connection of the first contact of the double-pole power circuit-breaker and the input of the regulating unit, and by the output - to the mains neutral conductor, the second and third contacts of the triple-pole circuit-breaker of the additional protection unit being connected between the neutral conductor and the output of the NO contact, which is not coupled with the NC contact, and between the end of the primary winding of the transformer and the point of connection of the NO and NC contacts of the switching element, the first analogous ends of the transformer windings being connected to the input of the regulating unit.

For smoother regulation of voltage at the load, the voltage regulator in accordance with any of the embodiments of the present invention is provided with a transformer switch which comprises a NO contact, a NC contact and a center contact, as well as two additional RC circuits, the resistors of which are connected to the point of connection of the NC and NO contacts of the first switching unit and to the center contact of the primary winding switch, the capacitors of the additional RC circuits are connected by the combined first outputs to the center point of the transformer primary winding and to the NO contact of the primary winding switch, and also, to the point of connection of the bridging capacitor and the end of the primary winding of the regulating transformer, and the NC contact of the switch, respectively.

For the protection of the transformer primary winding and prevention of disruptive consequences of a failure in the NO and NC contacts of the switching elements, in the voltage regulator in accordance with any of the non-cascaded embodiments of the invention, the additional protection unit is made as a diode bridge which is connected by the first input end to the first output of the shunt release of the double-pole power circuit- breaker, the second output of which is the input of the additional protection unit, while a thyristor of the protection unit is connected to the diode bridge output, wherein a limiting resistor and a control circuit resistor are connected in series between an anode and control electrode, the first contact of the triple-pole circuit-breaker is connected between the point of connection of the said resistors and a thyristor cathode, and a remote control button is connected between the first output of the shunt release of the double-pole power circuit-breaker and the neutral conductor, furthermore, a stand-by double-pole power circuit-breaker is connected between the mains phase conductor and the load.

According to the invention, in the embodiments of a voltage regulator made as n-cascades, the stand-by double-pole power circuit-breaker is connected to the first cascade between the phase conductor and the output, while in the rest of the cascades, the said stand-by double-pole power circuit-breaker is connected between the output of the preceding cascade and the output of its cascade.

Preferably, the control and switching unit of the voltage regulator is made as a voltage sensor comprising the series-connected step-down transformer, sensor diode bridge, unbalanced resistive bridge, wherein the input of the voltage sensor is connected to the controlled mains, the unbalanced resistive bridge diagonal, which is the voltage sensor output, is connected to the input of the two-position measuring and controlling device (programmable microcontroller) composed of the input unit, the output of which is connected to the input of a digital filter whose output is connected to the inputs of the first and second logic devices - two-position measuring and controlling devices with programmable settings, the outputs of which are connected to the first and second relay devices having control over the switching elements for the channels from 1 to n from one to more (three) phases.

According to the invention, in the embodiments of a voltage regulator made as n-cascades, the control and switching unit is made as 2n-circuits of switching control monitoring an increase and drop in the voltage at the load with respect to the preset level. To reduce the consequences of failures and to ensure personnel safety, the voltage regulator in accordance with any of the embodiments of the invention is provided with a unit of insulation resistance control for the insulated-neutral networks and of overload and short-circuit protection for the networks of any type, which is connected to the input of the voltage regulator.

For the protection from external and internal environmental effects, in the voltage regulator in accordance with any of the embodiments of the invention, a unit of combined protection from emergency modes (short circuit in the voltage regulator and the load, current overload, phase shift, variation in the input voltage beyond the allowed limits, increase in the in-block temperature, acoustic or optical indication) is inserted, which is connected between the mains and the voltage regulator.

The comparison of the claimed technical decision with the prior art has not revealed analogous decisions, which allows for establishing its correspondence to the novelty criterion.

All of the claimed embodiments of the present invention are industrially applicable, and the developed technical means meet the requirement of inventive level, since they do not explicitly follow from the prior art.

BRIEF DESCRIPTION OF THE DRAWINGS

The present invention is illustrated in the accompanying drawings, in which FIG. 1 shows a schematic of a single-phase step-down & step-up voltage regulator; FIG. 2 is a schematic of a single-phase step-down voltage regulator; FIG. 3 is a schematic of a single-phase step-up voltage regulator; FIG. 4 is a schematic of a voltage regulator with a unit of transformer primary winding switching; FIG. 5 is a control and switching circuit for three phases; FIG.6 is a schematic of a three-phase (multiphase) voltage regulator made as n-cascades.

The concept step-down means that the mains voltage has increased and it is necessary to step the voltage down at the load, the concept step-up means that the voltage has dropped and it is necessary to step the voltage up at the load; step-up and step down - the operation is within the predetermined range of the output voltage.

DETAILED DESCRIPTION OF PREFERRED EMBODIMENTS

An AC voltage regulator comprises a regulating unit 2 which includes a transformer with a secondary winding 6 and a primary winding 7, a switching unit having two switching elements, each being made as a pair of series-connected NC contacts 8, 9 and NO contacts 10, 11.

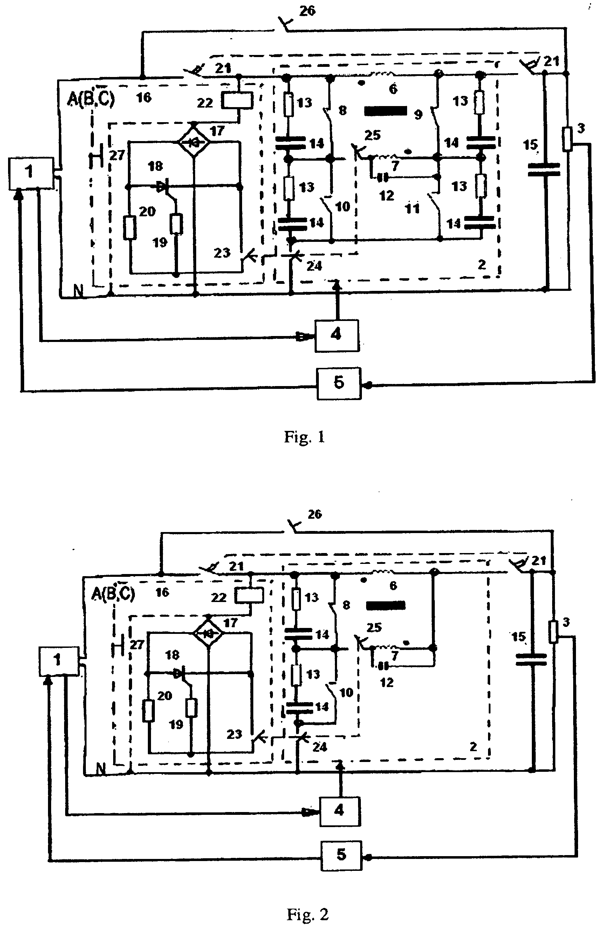

For a single-phase step-down & step-up voltage regulator (FIG. 1), the transformer primary winding 7 is connected via the switching unit to the input and output of the regulating unit 2, while the secondary winding 6 is connected into a load circuit 3, moreover, the primary winding 7 is connected in parallel with the secondary winding 6 by the opposite ends via the NC contacts 8 and 9 of the switching elements, likewise, a bridging capacitor 12 is connected in parallel with the transformer primary winding, and one of four RC circuits is connected in parallel with each contact of the switching elements, each of the RC circuits comprising resistors 13 and capacitors 14. An output capacitor 15 is connected in parallel with the load.

A double-pole power circuit-breaker 21 with a shunt release 22 is inserted into the voltage regulator having its contacts connected in series with the load circuit 3.

The double-pole power circuit-breaker 21 is connected so that its first contact is made between the mains phase conductor and a point of connection of the input of the regulating unit 2 and one of the outputs of the shunt release 22, which is the input of an additional protection unit 16 made as a diode bridge 17, the output of which is connected to power electrodes of a protection thyristor 18, a resistor 19 is connected into the circuit of the thyristor control electrode, the resistor 19 is connected by one output to the control electrode, and by the other output - to a limiting resistor 20, the second output of the release 22 is connected to the input of the diode bridge 17, the second contact of the double-pole power circuit-breaker is connected between the output of the regulating unit 2 and a point of connection of the load 3 and the output capacitor 15, while the first, second and third contacts 23, 24, 25 of a three-phase circuit-breaker are connected between a point of connection of the resistors 19, 20 and a cathode of the protection thyristor 18, between the point of connection of the contacts 10, 11 and the capacitor 14 and a neutral conductor N, and between a point of connection of the NC contacts 8, 10 and the second end of the primary winding 7, a stand-by double-pole power circuit-breaker 26 is connected between the mains 1 and the load 3, and a remote control button 27 is connected between the first output of the shunt release 22 of the double-pole power circuit-breaker 21 and the neutral conductor.

For a single-phase step-down voltage regulator (FIG. 2), the transformer primary winding 7 is connected to the phase and neutral conductors of the mains 1, while the secondary winding 6 is connected into the load circuit so that the first analogous ends of the primary winding 7 and the secondary winding 6 are accordingly connected to the phase and neutral conductors of the mains 1 and directly into the load circuit 3, and the second ends of the windings are interconnected via the NC contact 9 of the switching unit, the NO contact 11 is connected to the point of connection of the second end of the primary winding and the NC contact 9, a bridging capacitor 12 is connected in parallel with the transformer primary winding 7, the corresponding RC circuits 13, 14 are connected in parallel with each contact of the switching element, and the output capacitor 15 is connected in parallel with the load.

The double-pole power circuit-breaker 21 is connected in this configuration so that its first contact is made between the input of the phase conductor of the mains and a point of connection of the input of the regulating unit 2 and one of the outputs of the shunt release 22, which is the input of the additional protection unit 16 made as the diode bridge 17, the output of which is connected to power electrodes of the protection thyristor 18, the resistor 19 is connected into the circuit of the thyristor control electrode, said resistor 19 is connected by one output to the control electrode and by the other output - to the limiting resistor 20, the second output of the release 22 is connected to the input of the diode bridge 17, the second contact of the double-pole power circuit-breaker is connected between the output of the regulating unit 2 and a point of connection of the load 3 and the output capacitor 15, while the second 24 and third 25 contacts of the three-phase circuit breaker are connected between the neutral conductor and the output of the NO contact 11, which is not coupled to the NC contact, and between the end of the transformer primary winding 7 and a point of connection of the NO contact 11 and the NC contact 10 of the switching element, analogous ends of the transformer windings 7 and 6 are connected to the output of the regulating unit.

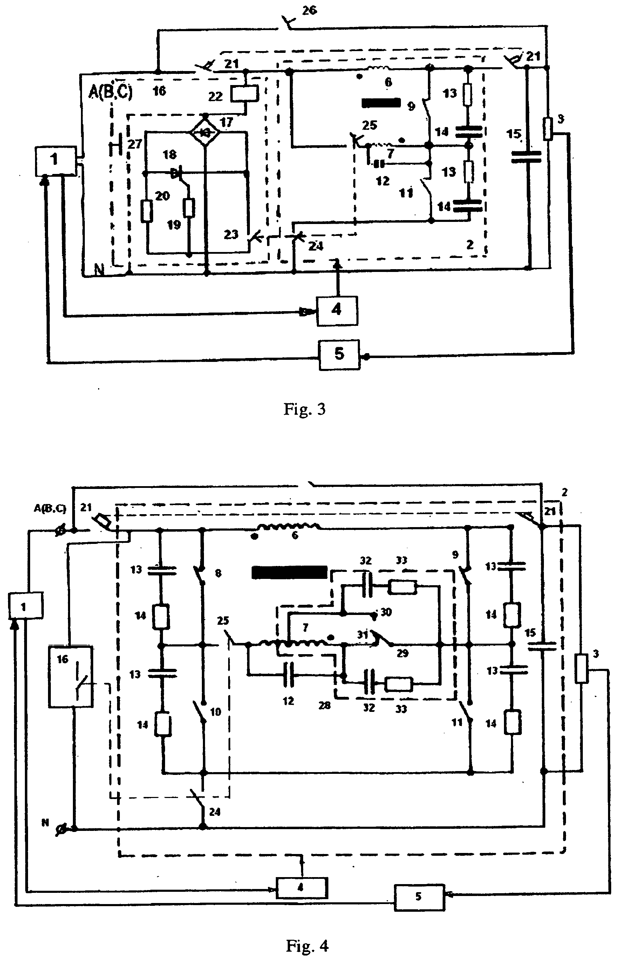

For a single-phase step-up voltage regulator (FIG. 3), the transformer primary winding 7 is connected to the phase and neutral conductors of the mains 1, while the secondary winding 6 is connected into the load circuit so that the first analogous ends of the primary winding 7 and the secondary winding 6 are accordingly connected to the phase and neutral conductors of the mains 1 and directly into the load circuit 3, and the second winding ends are interconnected via the NC contact 8 of the switching unit, the NO contact 10 is connected to the point of connection of the second end of the primary winding and the NC contact 8, the bridging capacitor 12 is connected in parallel with the transformer primary winding 7, and the corresponding RC circuits 13, 14 are connected in parallel with each contact of the switching element, the output capacitor 15 is connected in parallel with the load.

The double-pole power circuit-breaker 21 is connected in this configuration so that its first contact is made between the input of the phase conductor of the mains and a point of connection of the input of the regulating unit 2 and one of the outputs of the shunt release 22, which is the input of the additional protection unit 16 made as the diode bridge 17, the output of which is connected to power electrodes of the protection thyristor 18, the resistor 19 is connected into the circuit of the thyristor control electrode, said resistor 19 is connected by one output to the control electrode, and by the other output - to the limiting resistor 20, the second output of the release 22 is connected to the input of the diode bridge 17, the second contact of the double-pole power circuit-breaker is connected between the output of the regulating unit 2 and a point of connection of the load 3 and the output capacitor 15, while the second 24 and third 25 contacts of the three-phase circuit breaker are connected between the neutral conductor and the output of the NO contact 10, which is not coupled to the NC contact, and between the end of the transformer primary winding 7 and a point of connection of the NO contact 10 and the NC contact 8 of the switching element, analogous ends of the transformer windings 7 and 6 are connected to the input of the regulating unit 2.

A primary winding tap switch 28 (FIG. 4) is placed in the circuit of the transformer primary winding 7, in which 29 is a center contact of the switch, 30 - a NO contact of the switch, and 31 - a NC contact of the switch. The center contact 29 is coupled to the point of connection of the contacts 9 and 11, the NO contact 30 is coupled to the tapping of the primary winding 7, the NC contact 31 - to the start of the primary winding, the second RC circuits comprising a capacitor 32 and a resistor 33 are connected in parallel with the contacts 29, 30 and 29, 31. Thus, the primary winding tap switch 28 which is connected to the midpoint of the transformer primary winding 7 provides three switching modes 29, 30 and 31. That is, the start of the primary winding 7 of the regulating transformer is connected to the end of its secondary winding 6 through the primary winding tap switch 28 and the NC contact 9. The end of the primary winding 7 of the regulating transformer is connected to the start of its secondary winding 6 and through the NC contact 8 to the mains voltage. The secondary winding 6 is connected in parallel with the primary winding 7 through the switching elements 8 and 9.

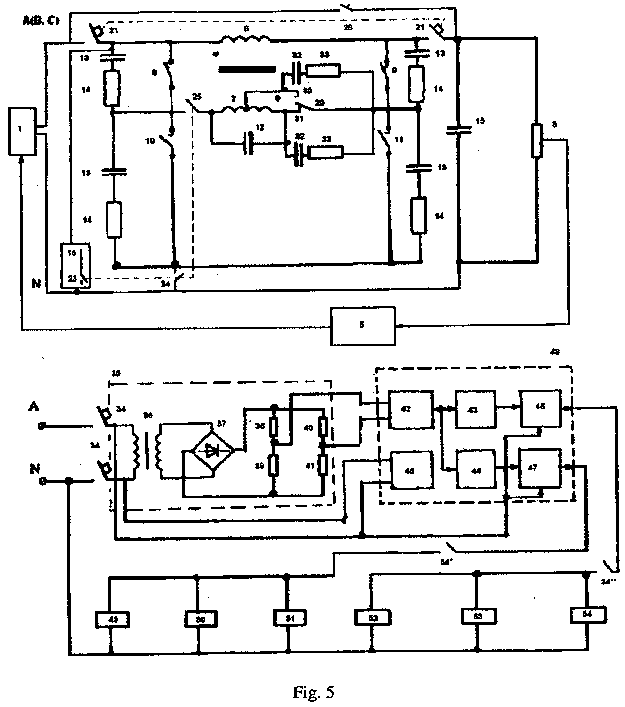

The control and switching unit (FIG. 5) includes a voltage sensor 35 comprising a transformer 36, a diode bridge 37, an unbalanced resistive bridge composed of resistors 38-41, and a two-position measuring and controlling device 48 (programmable microcontroller).

The input of the voltage sensor 35 is connected into the controlled mains, the output (diagonal of the resistive bridge 38-41) is connected to the input of the unit 48. The unit 48 has its internal power source. The control unit has an input device 42, two logic devices 43 and 44, two relay devices 46 and 47, each having control over a corresponding group of switching elements 49-54 that provide the required switching of the transformer primary windings as a function of the mains U value.

A circuit-breaker 34 is connected to one of the phases (for instance, phase A). The voltage is controlled in one phase, with the switching being provided in three phases. If necessary, an individual control over each phase can be performed.

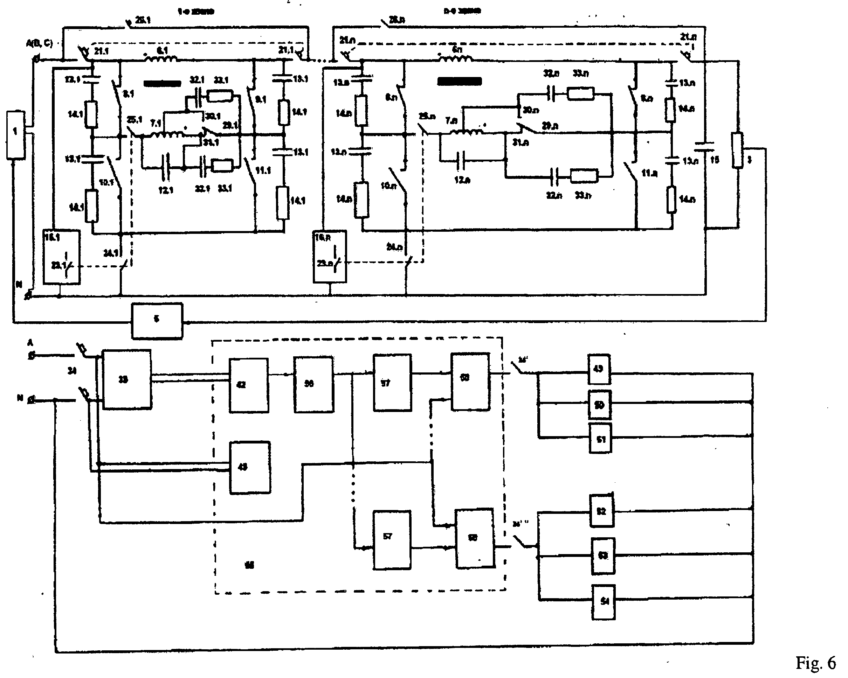

In the embodiments with a cascade circuit of the voltage regulator (FIG. 6), the device comprises series-connected n-cascades, each including a transformer with the secondary winding 6 and the primary winding 7, a switching unit having two switching elements, each being made as a pair of series-connected NC contacts 8, 9 and NO contacts 10, 11.

For a step-down & step-up voltage regulator (FIG. 1), the transformer primary winding 7 is connected, in each cascade, through the switching unit to the input and output of the regulating unit 2, while the secondary winding 6 is connected into the load circuit 3, furthermore, the primary winding 7 is connected in parallel with the secondary winding 6 by the opposite ends through the NC contacts 8 and 9 of the switching elements, likewise, the bridging capacitor 12 is connected in parallel with the transformer primary winding, and one of the 4 RC circuits, each comprising resistors 13 and capacitors 14, is connected in parallel with each contact of the switching elements. The output capacitor 15 is connected in parallel with the load.

For a step-down voltage regulator (FIG. 2), the transformer primary winding 7 is connected, in each cascade, to the phase and neutral conductors of the mains 1, while the secondary winding 6 is connected into the load circuit so that the first analogous ends of the primary winding 7 and the secondary winding 6 are accordingly connected to the phase and neutral conductors of the mains 1 and directly into the load circuit 3, and the second ends of the windings are interconnected via the NC contact 9 of the switching unit, the NO contact 11 is connected to the point of connection of the second end of the primary winding and the NC contact 9, the bridging capacitor 12 is connected in parallel with the transformer primary winding 7, and the corresponding RC circuits 13, 14 are connected in parallel with each contact of the switching element. The output capacitor 15 is connected in parallel with the load.

For a single-phase step-up voltage regulator (FIG. 3), the transformer primary winding 7 is connected, in each cascade, to a phase and neutral conductors of the mains 1, while the secondary winding 6 is connected into the load circuit so that the first analogous ends of the primary winding 7 and the secondary winding 6 are accordingly connected to the phase and neutral conductors of the mains 1 and directly into the load circuit 3, and the second ends of the windings are interconnected via the NC contact 8 of the switching unit, the NO contact 10 is connected to the point of connection of the second end of the primary winding and the NC contact 8, the bridging capacitor 12 is connected in parallel with the transformer primary winding 7, and the corresponding RC circuits 13, 14 are connected in parallel with each contact of the switching element. The output capacitor 15 is connected in parallel with the load.

Each cascade is provided with the double-pole power circuit-breaker 21 having the shunt release 22, the first and second contacts of which are connected in series with the load circuit at the input and output of the regulating unit 2 between the phase conductor of the mains and the output of the said unit in the first cascade, and in the rest of the cascades - between the output of the preceding cascade and the input of the regulating unit, and between the load and the output of its cascade.

With the cascade circuit of the voltage regulator (FIG. 6), the stand-by double-pole power circuit-breaker 26 is connected, in the first cascade, between the phase conductor and the cascade output, while in the rest of the cascades, the said stand-by double-pole power circuit-breaker is connected between the output of the preceding cascade and the output of its cascade, the control and switching unit 4 being made as 2n-circuits of switching control monitoring an increase and drop in the voltage at the load with respect to the preset level.

The device operates in the following way.

Electric power from the mains 1 is transferred to the load 3 via the regulating unit 2, operating in an autotransformer mode, in two ways: by means of electric coupling and by means of electromagnetic coupling. In the process, the bulk of electric power (up to 100%) is transferred by way of electric coupling and sufficiently less (up to 0%) - by means of electromagnetic coupling. The adjustment of voltage at the load 3 is accomplished by the control and switching unit 4 connected to the input of the voltage regulator. The unit 5 connected to the input and output of the voltage regulator provides complex protection of the device.

The regulating unit connected in the autotransformer circuit, when the secondary winding is connected in series with the load and the primary winding is connected in a special circuit, provides the following modes of operation:

1. A normal mode. In this mode, the mains voltage and the voltage at the load are equal, the optimal voltage value is ensured. That is, the most advantageous mode of operation is provided for the customer. The primary and secondary windings of the transformer connected to each other in parallel are series-connected with the load. In this mode, the transformer primary winding is practically short-circuited, and the current flows through it due to the EMF induced by the current in the secondary winding. A drop in the voltage in the secondary winding is extremely small (from a few volts to fractions of a volt), since the inductance of the short-circuited transformer is low. The transformer operation mode is similar to that of the short-circuited current transformer. In this mode, the input and output voltages are actually equal. The power from the mains to the load is 100% transferred through electric coupling.

2. A step-down mode. With an increase in the input voltage above the allowed level, the transformer primary winding is connected to the input voltage so that the induced EMF in the secondary winding will be directed opposite the mains voltage, while the voltage at the load, i.e. the output voltage will be reduced thereby to compensate for the input voltage increase. Thus, the output voltage at the load will be equal to the difference between the input voltage and the voltage induced by the primary winding in the secondary winding due to their electromagnetic coupling. The power from the mains is transferred to the load through electric coupling (major part) and through electromagnetic coupling of the windings (additional part).

3. A step-up mode. As the input voltage is reduced below the allowed level, the transformer primary winding is accordingly connected to the mains by the opposite polarity thereby to increase the output voltage. That is, the output voltage will be equal to the sum of the input voltage and the voltage induced by the primary winding in the secondary winding of the transformer. The power is transferred from the mains to the load through electric coupling (major part) and through electromagnetic coupling of the windings (additional part).

For the modes (2) and (3), part of the power from the mains is transferred to the load through electric coupling, while the other part - through electromagnetic coupling. This ratio depends on the transformation ratio K of the regulating unit. The more it is, the major portion of the power is transferred through electric coupling. The switching of transformer modes is performed in the circuit of the primary winding with a large number of turns, i.e. with the currents that are K times less than the load currents, where K is a transformation ratio, and with no discontinuity in the load circuit. Accordingly, the transformer power is K times less than the load power. It corresponds to the power portion transmitted from the mains to the load due to electromagnetic coupling of windings (electromagnetic way).

The voltage regulator initial state - a normal mode of operation (mains voltage is within the preset limits), i.e. contacts 8 and 9 of the switching elements are closed, while contacts 10 and 11 are open. The transformer primary winding 7 and the secondary winding 6 are connected in parallel with each other and in series with the load 3. Inductive impedance of the system is quite low (the tenth-hundredth of an Ohm), the input and output voltages are equal. The power is 100% transmitted from the mains to the load through electric coupling.

In case the mains voltage exceeds the preset limits, the voltage regulator transfers to the step-down mode. The control and switching unit activates the coil controlling the contacts 8, 10 (FIG. 2). As a result, the contact 8 is open and the NO contact 10 is closed. In the process, the contact 10 is not closed until the contact 8 is open (such is the design feature of the switching unit). To return to the initial state, contact switching is effected in the reverse order. The transformer primary winding 7 carries the current in the circuit: phase A, the transformer secondary winding 6, contact 8, primary winding 7, contact 10, and mains neutral conductor. The transformer primary winding 7 induces the EMF in the secondary winding which is directed, with the indicated polarity of windings, opposite the mains voltage. Thus, the voltage at the load is equal to the difference between the mains voltage and the voltage induced in the secondary winding by the primary winding. In this case, the primary winding is connected to the stabilized voltage (in parallel with the load), which prevents its failure when the mains voltage is increased. The power is transmitted from the mains to the load by both the electric coupling (major part) and electromagnetic coupling (additional part).

When the mains voltage is reduced, the voltage regulator transfers to the step-up mode. The control and switching unit activates the coil of the element 50. As a result, the NC contact 9 is open, while the NO contact 10 is closed. The sequence of contact switching is similar to that of mode 2. The transformer primary winding carries the current in the circuit: phase A, contact 9, primary winding 7, contact 11, and mains neutral conductor. With the indicated polarity of windings, the transformer primary winding 7 induces the EMF in the secondary winding 6, which is directed in conformity with the mains voltage. The voltage at the load is equal to the sum of the mains voltage and the voltage induced in the secondary winding 6 by the primary winding 7 of the transformer. The power is transmitted from the mains to the load by both the electric coupling (major portion) and electromagnetic coupling (additional portion).

An additional switching element provided with taps, i.e. the primary winding switching unit 28, allows the transformer ratio K to be changed either manually or automatically from the control and switching unit 4, which expands the control range and ensures smoother control.

The capacitor 15 in output serves for load reactive current compensation (full or partial) and for decreasing the rated current (power) of the voltage regulator and the transformer power, and as a result, for reducing the total cost of the voltage regulator. It can be used in the circuit for active-inductive loads.

During transition from the normal mode to the step-down mode upon opening of the contact 8, the circuit of the primary winding 7 of the regulating transformer is not interrupted but is connected to the former point, i.e. phase A of the mains, though via RC circuits 13,14. Under the laws of switching, at the first moment the capacitors 13 and 12 represent short-circuited topologies, and the current in the winding is restricted by the resistor 14. When the contact 10 is closed, the primary winding is connected to the mains neutral conductor. Therefore, the switching process is light-duty, with no discontinuity in the primary winding circuit, no contact arcing, and no induction of dangerous self-induced EMF in the primary winding 7. Thus, the principle function of RC circuits is to facilitate operation of contacts 8-11 during the switching transient (to provide spark suppression) and to facilitate operation of the transformer during the switching transient (to avoid discontinuity in the primary winding circuit).

A three-phase configuration of the device can be implemented for regulating the voltage in general or of each phase independently (FIG. 4).

With an excessive current in the circuit of the transformer primary winding 7, the contact 25 of the triple-pole circuit breaker of the additional protection opens thereby to open the interconnected contact 23 of the regulating unit of the additional protection. As this takes place, shunting of the control electrode of the thyristor 18 will cease,which will open thereby to activate via bridge 17 the coil of the shunt release 22 of the double-pole power circuit-breaker 21. The regulating unit becomes disconnected from the phase of the mains 1.

There will be a similar situation if the contact 24 of the triple-pole circuit-breaker trips due to an excessive current flowing through it in response to a fault in contacts 8-11.

When the mains voltage decreases below a preset level, in the regulating unit of level 4, the coil of the switching unit 49 (FIG. 5) is activated via the respective relay thereby to open the contact 8 and to close the contact 10. As a result, the secondary winding 6 is powered, and the voltage induced in the secondary winding 6 increases in accordance with the mains voltage and the voltage at the load 3.

In the normal mode of operation, the shunt release 22 of the double-pole power circuit-breaker is disconnected, since the first, second and third contacts of the triple-pole circuit-breaker 23, 24, 25, respectively, are closed and have no effect on the operation of the device on the whole: the first contact 23 shunts the control circuit of the thyristor 18 of the protection unit, the current through the component 22 is limited by the rating of the resistor 20, which is not enough for operation of the said component 22, the double-pole power circuit-breaker 21 is switched on, the second and third contacts 24, 25 of the triple-pole circuit-breaker make the connection of the transformer primary winding with the point of connection of contacts 8,10 and contacts 10, 11 of the switching elements and the neutral conductor.

Upon a failure in the regulating unit 2 (in the circuit of the transformer primary winding 7, faulty contacts 8-11 and other faults), the shunt release 22 of the double-pole power circuit-breaker 21 comes into action, the contacts 23, 24, 25 become disconnected, the double-pole power circuit-breaker 21 is disconnected, too; the stand-by double-pole power circuit-breaker 26 is switched on manually. By using the remote control button 27, it is possible to actuate the shunt release 22 of the power circuit-breaker 21 in order to perform any protection or information function (increase in in-block temperature, circuit overvoltage, operational condition signalling, etc.) additionally by-passing around the combined protection unit 5. Moreover, with the use of the said button it is possible to perform remote control (switching off) of the voltage regulator.

By placing the stand-by double-pole power circuit-breaker 26 in a circuit between the phase conductor and the load, it is possible to disconnect the device from both sides and thereby to provide complete de-energizing of it, and thus, to ensure operating personnel safety.

The control and switching unit (FIG. 5) operates in the following way.

Circuit components in FIG.5 are shown in the initial state (when the mains voltage U is normal). The primary winding 7 and the secondary winding 6 of the transformer are parallel-connected through NC contacts 8-11 and the two-position measuring and controlling unit 48 (programmable microcontroller).

Controlled voltage is supplied to the step-down transformer 36 of the sensor (for example 220/12 V) and is rectified by the sensor diode bridge 37. The resulting reduced rectified voltage is delivered to the unbalanced resistive bridge composed of resistors 38-41. For instance, if the input voltage range of the microcontroller is 0-1 V, the resistors are selected so that upon variation in the input voltage from ~10 V to -250 V the constant voltage at the bridge output can be within one volt.

Given that the voltage at the diode bridge input is $U_{inp}$, the current through the circuit 38, 39 will be equal to:

$$I_1 = U_{inp}/(R1+R2);$$

through the circuit 40, 41 -

$$I_2 = U_{inp}/(R3+R4).$$

Then the voltage across the resistor 38 will be equal to:

$$U_{38} = U_{inp}*R1/(R1+R2),$$

while across the resistor 40 -

$$U_{40} = U_{inp}*R3/(R3+R4),$$

where R1 - resistance across the resistor 38, R2 - resistance across the resistor 39, R3 - resistance across the resistor 40, R4 - resistance across the resistor 41.

Considering the output voltage of the sensor is equal to the difference in voltages across R1 and R2, the result is as follows:

$$U_{outp} = U_{inp} * ( R1/(R1+R2) - R3/(R3+R4) ) = C* U_{inp},$$

where C= R1/(R1+R2) - R3/(R3+R4).

The resistors have been chosen as thermally stable, and within the range of -20°C - +60°C a measuring error is no more than 1%. What is more, the characteristic is practically linear.

Thereupon the signal from the sensor comes to the input of the programmable microcontroller 48 and after having been transformed by the unit 42 - to logic devices 43 and 44 of the first and second channels, respectively. Depending on the signal level, both of them are either disconnected or any of them comes into action.

The input of the sensor 35 is connected to the controlled mains, while the output (diagonal of the resistive bridge 38-41) is connected to the input of the unit 48. The unit 48 has its internal power-supply source. The control unit has the input device 42, two logic devices 43 and 44, two relay devices 46 and 47, each controlling a corresponding group of the switching elements 49-54 which perform the required changeover of primary windings of regulating transformers as a function of the U value of the mains.

Controlled voltage is supplied to the step-down transformer 36 of the sensor (for instance 220/12 V) and is rectified by the sensor diode bridge 37. The resulting reduced rectified voltage is delivered to the unbalanced resistive bridge composed of resistors 38-41. For instance, if the input voltage range of the microcontroller is 0-1 V, the resistors are selected so that upon variation in the input voltage from -10 V to 250 V the constant voltage at the bridge output can be within one volt.

Thereupon the signal from the sensor comes to the input of the programmable microcontroller 48 and after having been transformed by the unit 42 - to logic devices 43 and 44 of the first and second channels, respectively. Depending on the signal level, both of them are either disconnected or any of them comes into action.

The voltage regulator control is effected as follows:

Circuit components are shown in the initial state (when the input voltage U is normal). The primary winding 7 and the secondary winding 6 of the regulating transformer are parallel-connected through NC contacts having control over the respective 2n- output relay devices 58. The relay devices control the respective coils of the switching elements 8, 10 and 9, 11 in the circuit of the primary windings 7 of regulating transformers, of each component, and of each phase.

With an increase in the mains voltage above the allowed level, a signal from the voltage sensor 35 comes to the input of the input device 42 of the microcontroller 55, following which the signal is filtered against interfering signals with a digital filter 56 and is transformed with the help of it into a digital code that controls 2n-two-position measuring and controlling devices 57. Depending on individual settings of each channel (of the unit 57), the output relay devices 58 of the respective channels come into action, thereby causing the required changeover in the circuits of the primary windings 7 of the regulating transformer and a reduction in the load voltage.

The circuit operates in a similar way when the mains voltage is reduced, with the load voltage being increased. If the mains voltage is within the allowable range, the system is in the state shown in FIG. 5, that is the mains voltage and the load voltage are equal. The peculiarity of the given circuit is that the control is performed with the use of one sensor due to different settings of the measuring and controlling devices.

With the switches 34' and 34" positioned between the output of the unit 58 and a point of connection of the units 49-51, and between the output of another similar unit 58 and a point of connection of the units 52-54, it is possible to disable operation of any control channel.

The voltage regulator protection is effected by protective devices of the unit 5.

A combined protection unit can include the control of insulation resistance for insulated-neutral networks, protection against overloads and short circuits for the circuits of any type, and protection against different fault conditions (short circuit in the voltage regulator and the load, current overload, phase shift, variation in the input voltage above the allowable range, increase in the in-block temperature, audible or optical indication). The connection of such units depends on their function and design features. They can be connected to the voltage regulator input, output, directly to the load and other points of the device.

INDUSTRIAL APPLICABILITY

A test has been made on an experimental model with a power of up to 50 kW and a design total voltage instability of ±2% and ±5%. The efficiency of the voltage regulator depending on the stages of regulation was 99.56%. Regulation

11

in steps of 6-12 V.

Regulating transformers for a three-phase load of 50 kW were used as components - 1 kW for each phase, voltage being 220/12 V, rated currents of the transformer primary windings being 4.54 A, those of the secondary windings - 83.3 A. The rated current of the switching elements 8-11 was 16 A, the rated voltage of contacts - 660 V. The circuit-breakers 23-25 - rated at 6 A, the circuit-breakers 21, 26 - 80A. The measuring and controlling device of the 2 TPM1 type of the company OBEH was used as a microcontroller.

It can be seen that the rated current through QFy is 15-20 times less than that of the power circuit-breaker QFc.

So, disclosed are the embodiments of an AC voltage regulator providing the step-down, step-up; step-up and step-down modes of operation for a separate voltage regulator and a voltage regulator in a cascade circuit with extended protection and service functions along with the improvement of some units. The embodiments of the devices of the invention have a number of advantages over conventional AC voltage regulators. The presented data provide evidence in support of the possibility for implementation of the present invention. The embodiments of AC voltage regulators in accordance with the present invention can operate at any load without distortion of a voltage waveform. The switching takes place with no current interruption and with the currents to be K times less than the load current.

As is known, normative documents for power quality regulate the following parameters: 1) voltage deviation, 2) phase unbalanced voltage, 2) voltage unsinusoidality, and 3) content of higher harmonic components.

The voltage regulator in accordance with the present invention makes possible the adjustment of the all stated parameters that are subject to regulation, and also, it compensates for the load reactive power, in full or in part, caused by both the load current of base frequency and higher harmonic components, since it is virtually an inductive-capacitive filter for higher harmonic currents.

Thus, the regulator in accordance with the invention is a device that ensures qualitative power supply for the consumers and energy saving.

**Claims**

1. An AC voltage regulator with protection components comprising a regulating unit (2) which includes a transformer, a switching unit in the form of two switching elements, each of which is made as a pair of series-connected normally-closed, NC (8, 9), and normally-opened, NO (10, 11), contacts, wherein in a normal mode of operation when mains voltage is within preset limits, the NC contacts (8, 9) of the switching elements are closed, while the NO contacts (10, 11) are open, bridging and output capacitors (12, 15) and four RC circuits, as well as a control and switching unit, the transformer primary winding (7) being connected via the switching unit to the input and output of the regulating unit, while the secondary winding (6) being connected into a load (3) circuit, moreover, the primary winding (7) being connected in parallel with the secondary winding (6) by the opposite ends via NC contacts (8, 9) of the switching elements, likewise, the bridging capacitor (12) being respectively connected in parallel with the transformer primary winding (7), and the RC circuit being connected in parallel with each contact of the switching elements, the output capacitor (15) being connected in parallel with the load (3), **characterized in that** a double-pole power circuit-breaker (21) with a shunt release (22) is inserted having its contacts connected in series into the load (3) circuit at the input and output of the regulating unit (2) between a phase conductor of the mains and the input of the regulating unit (2), and between the load (3) and the output of the regulating unit (2), furthermore, an additional protection unit (16) is inserted which is connected by the input to the point of connection of the double-pole power circuit-breaker (21) and the input of the regulating unit (2), and by the output - to the mains neutral conductor, the said additional protection unit (16) having the first, second and third contacts (23, 24, 25) of a triple-pole circuit-breaker connected between the neutral conductor and the point of connection of NO contacts (10, 11) of both switching elements, and between the output of the transformer primary winding (7) and a point of connection of the pair of NO and NC contacts (10, 11; 8, 9) of the second switching element.

2. The AC voltage regulator according to Claim 1, **characterized in that** a transformer primary winding switch (28) is inserted into it comprising NO (10, 11), NC (8, 9) and center contacts, as well as two additional RC circuits the resistors of which are connected to the point of connection of the NC (10, 11) and NO (8, 9) contacts of the first switching unit and further to the center contact of the primary winding switch, the capacitors of the additional RC circuits are connected by the combined first outputs to the midpoint of the transformer primary winding (7) and the NO contacts (8, 9) of the primary winding switch, and further to the point of connection of the bridging capacitor (12) and the output of the primary winding (7) of the regulating transformer and the NC contacts (8, 9) of the switch, respectively.

3. The AC voltage regulator according to Claim1, **characterized in that** the additional protection unit (16) is made as a diode bridge (17) which is connected by the first input end to the first output of the shunt release (22) of the double-pole power circuit-breaker (21), the second output of which is the input of the additional protection unit (16), with a thyristor (18) of the protection unit being connected to the output of the diode bridge, wherein a limiting resistor (20) and a control circuit resistor (19) are connected in series between the anode and control electrode of the thyristor (18), the first contact (23) of the three-pole circuit-breaker is connected between the point of connection of the said resistors and thyristor cathode, while a remote control button (27) is connected between the first output of the shunt release (22) of the double-pole power circuit-breaker (21) and the neutral conductor.

4. The AC voltage regulator according to Claim1, **characterized in that** a stand-by double-pole power circuit-breaker (26) is connected between the mains phase conductor and the load (3).

5. The AC voltage regulator according to Claim1, **characterized in that** the control and switching unit is made in the form of a voltage sensor (35) comprising a series-connected step-down transformer (36), a sensor diode bridge (37), an unbalanced resistive bridge (38-41), with the voltage sensor input being connected to the controlled mains, the diagonal of the unbalanced resistive bridge (38-41), which is the voltage sensor output, being connected to the input of a two-position measuring and controlling device (48) being programmable microcontroller composed of an input unit (42), the output of which is connected to the input of a digital filter whose output is connected to the inputs of first and second logic devices (43, 44) - two-position measuring and controlling devices with programmable settings, the outputs of which are connected to first and second relay devices (46, 47) having control over switching elements (49-54) for channels from 1 to n from one to three phases.

6. The AC voltage regulator according to Claim1, **characterized in that** a unit of insulation resistance control is connected to the input of the voltage regulator for isolated-neutral networks and of overload and short-circuit protection for the networks of any type.

7. The AC voltage regulator according to Claim 1, **characterized in that** a unit (5) of combined protection from emergency modes, namely short circuit in the voltage regulator and the load, current overload, phase shift, variation in the input voltage beyond the allowable range, increase in the in-block temperature, acoustic or optical indication, is connected between the mains and the voltage regulator.

**Patentansprüche**

1. Wechselspannungsregler mit Schutzkomponenten, umfassend eine Regeleinheit (2), die einen Transformator aufweist, eine Schalteinheit in Form zweier Schaltelemente, von denen jedes als ein Paar von in Reihe geschalteten normal geschlossenen, NC (8, 9), und normal geöffneten, NO (10, 11), Kontakten ausgebildet ist, wobei in einem Normalbetrieb, wenn die Netzspannung innerhalb vorbestimmter Grenzen liegt, die NC Kontakte (8, 9) der Schaltelemente geschlossen sind, während die NO Kontakte (10, 11) geöffnet sind, Überbrückungs- und Ausgangskondensatoren (12, 15) und vier RC-Glieder sowie eine Steuerungs- und Schalteinheit, wobei die Transformator-Primärwicklung (7) über die Schalteinheit mit dem Eingang und Ausgang der Regeleinheit verbunden ist, während die Sekundärwicklung (6) in einen Lastkreis (3) angeschlossen ist, wobei ferner die Primärwicklung (7) mittels der entgegen gesetzten Enden über NC Kontakte (8, 9) der Schaltelemente parallel zur Sekundärwicklung (6) geschaltet ist, wobei ebenso der Überbrückungskondensator (12) entsprechend parallel zur Transformator-Primärwicklung (7) geschaltet ist, und wobei die RC-Glieder parallel zu jedem Kontakt der Schaltelemente geschaltet sind, wobei der Ausgangskondensator (15) parallel zur Last (3) geschaltet ist, **dadurch gekennzeichnet, dass** ein zweipoliger Lastschalter (21) mit einem Spannungsauslöser (22) eingeführt ist, der mit seinen Kontakten in Reihe in den Lastkreis (3) am Eingang und Ausgang der Regeleinheit (2) zwischen einem Phasenleiter des Netzes und dem Eingang der Regeleinheit (2), und zwischen der Last (3) und dem Ausgang der Regeleinheit (2) geschaltet ist, ferner eine zusätzliche Schutzeinheit (16) eingeführt ist, die mit dem Eingang mit dem Verbindungspunkt des zweipoligen Lastschalters (21) und dem Eingang der Regeleinheit (2) verbunden ist, und mit dem Ausgang mit dem Neutralleiter des Netzes verbunden ist, wobei die zusätzliche Schutzeinheit (16) die ersten, zweiten und dritten Kontakte (23, 24, 25) eines dreipoligen Lastschalters zwischen dem Neutralleiter und dem Verbindungspunkt der NO Kontakte (10, 11) der beiden Schaltelemente, und zwischen dem Ausgang der Transformator-Primärwicklung (7) und einem Verbindungspunkt des Paares von NO und NC Kontakten (10, 11; 8, 9) des zweiten Schaltelements angeschlossen hat.

2. Wechselspannungsregler nach Anspruch 1, **dadurch gekennzeichnet, dass** ein Transformator-Primärwicklungsschalter (28) darin eingeführt ist, umfassend NO (10, 11), NC (8, 9) und Mittelkontakte, sowie zwei zusätzliche RC-Glieder, deren Widerstände mit dem Verbindungspunkt der NC (10, 11) und der NO (8, 9) Kontakte der ersten Schalteinheit und ferner mit dem Mittelkontakt des Primärwicklungsschalters verbunden sind, die Kondensatoren der zusätzlichen RC-Glieder mit den kombinierten ersten Ausgängen mit dem Mittelpunkt der Transformator-Primärwicklung (7) und der NO Kontakte (8, 9) des Primärwicklungsschalters verbunden sind, und ferner jeweils mit dem Verbindungspunkt des Überbrückungskondensators (12) und dem Ausgang der Primärwicklung (7) des Regeltransformators und der NC Kontakte (8, 9) des Schalters.

**3.** Wechselspannungsregler nach Anspruch 1, **dadurch gekennzeichnet, dass** die zusätzliche Schutzeinheit (16) als eine Diodenbrücke (17) ausgebildet ist, die mit dem ersten Eingangsende mit dem ersten Ausgang des Spannungsauslösers (22) des zweipoligen Lastschalters (21) verbunden ist, dessen zweiter Ausgang der Eingang der zusätzlichen Schutzeinheit (16) ist, mit einem Thyristor (18) der Schutzeinheit, der mit dem Ausgang der Diodenbrücke verbunden ist, wobei ein Begrenzungswiderstand (20) und ein Steuerschaltkreiswiderstand (19) zwischen der Anode und der Steuerelektrode des Thyristors (18) in Reihe geschaltet sind, der erste Kontakt (23) des dreipoligen Lastschalters zwischen dem Verbindungspunkt des Widerstandes und der Thyristrokathode geschaltet ist, während ein Fernsteuerknopf (27) zwischen dem ersten Ausgang des Spannungsauslösers (22) des zweipoligen Lastschalters (21) und dem Neutralleiter geschaltet ist.

**4.** Wechselspannungsregler nach Anspruch 1, **dadurch gekennzeichnet, dass** ein zweipoliger Standby-Lastschalter (26) zwischen dem Phasenleiter des Netzes und der Last (3) geschaltet ist.

**5.** Wechselspannungsregler nach Anspruch 1, **dadurch gekennzeichnet, dass** die Steuerungs- und Schalteinheit in Form eines Spannungssensors (35) ausgebildet ist, umfassend einen in Reihe geschalteten Abwärtstransformator (36), eine Sensordiodenbrücke (37), eine unsymmetrische Widerstandsbrücke (38-41), wobei der Spannungssensoreingang mit dem gesteuerten Stromnetz verbunden ist, die Diagonale der unsymmetrischen Widerstandsbrücke (38-41), die der Spannungssensorausgang ist, in Verbindung mit dem Eingang einer zweistufigen Mess- und Steuereinrichtung (48) steht, die einen programmierbaren Mikrocontroller darstellt, bestehend aus einer Eingangseinheit (42), deren Ausgang mit dem Eingang eines digitalen Filters verbunden ist, dessen Ausgang mit den Eingängen erster und zweiter logischer Einrichtungen (43, 44), nämlich zweistufiger Mess- und Steuereinrichtungen mit programmierbaren Einstellungen, verbunden ist, deren Ausgänge mit ersten und zweiten Relaiseinrichtungen (46, 47) verbunden sind, die die Kontrolle über Schaltelemente (49-54) für Kanäle von 1 bis n von einer bis drei Phasen haben.

**6.** Wechselspannungsregler nach Anspruch 1, **dadurch gekennzeichnet, dass** eine Einheit zur Überwachung des Isolationswiderstandes mit dem Eingang des Spannungsreglers für isolierte Neutralnetzwerke und von Überlade- und Kurzschlusssicherung für Netzwerke beliebiger Art verbunden ist.

**7.** Wechselspannungsregler nach Anspruch 1, **dadurch gekennzeichnet, dass** eine Einheit (5) zum kombinierten Schutz vor Notbetrieben, nämlich Kurzschluss in dem Spannungsregler und der Last, Stromüberlastung, Phasenverschiebung, Schwankungen in der Eingangsspannung über den erlaubten Bereich hinaus, Erhöhung der Innentemperatur, akustische oder optische Anzeichen, zwischen dem Netz und dem Spannungsregler geschaltet ist.

## Revendications

**1.** Un régulateur de tension AC avec des composants de protection comprenant une unité de régulation (2) qui comprend un transformateur, une unité de commutation sous la forme de deux éléments de commutation, chacun d'eux se composant d'une paire de contacts raccordés en série normalement fermés, NC (8, 9), et normalement ouverts, NO (10, 11), dans lequel, dans un mode de fonctionnement normal, lorsque la tension de secteur se situe à l'intérieur de limites prédéfinies, les contacts NC (8, 9) des éléments de commutation sont fermés, tandis que les contacts NO (10, 11) sont ouverts, des condensateurs de sortie et de pontage (12, 15) et quatre circuits RC, ainsi qu'une unité de commutation et de commande, l'enroulement primaire de transformateur (7) étant raccordé par l'intermédiaire de l'unité de commutation à l'entrée et la sortie de l'unité de régulation, tandis que l'enroulement secondaire (6) est raccordé à un circuit de charge (3), de plus, l'enroulement primaire (7) étant raccordé en parallèle à l'enroulement secondaire (6) par les extrémités opposées par l'intermédiaire des contacts NC (8, 9) des éléments de commutation, de même, le condensateur de pontage (12) étant respectivement raccordé en parallèle à l'enroulement primaire de transformateur (7), et les circuits RC étant raccordés en parallèle à chaque contact des éléments de commutation, le condensateur de sortie (15) étant raccordé en parallèle à la charge (3), **caractérisé en ce qu'**un disjoncteur d'alimentation bipolaire (21) avec un déclencheur shunt (22) est inséré avec ses contacts raccordés en série au circuit de charge (3) au niveau de l'entrée et de la sortie de l'unité de régulation (2) entre un conducteur de phase du secteur et l'entrée de l'unité de régulation (2), et entre la charge (3) et la sortie de l'unité de régulation (2), de plus, une unité de protection additionnelle (16) est insérée qui est raccordée par l'entrée au point de raccordement du disjoncteur d'alimentation bipolaire (21) et à l'entrée de l'unité de régulation (2), et par la sortie au conducteur neutre du secteur, ladite unité de protection additionnelle (16) ayant les premier, deuxième et troisième contacts (23, 24, 25) d'un disjoncteur tripolaire raccordés entre le conducteur neutre et le point de raccordement de contacts NO (10, 11) des deux éléments de commutation, et entre la sortie de l'enroulement primaire de transformateur (7) et un point de raccordement de la paire de contacts NO et NC (10, 11; 8, 9) du deuxième élément de commutation.

2. Lé régulateur de tension AC selon la revendication 1, **caractérisé en ce qu'**un commutateur d'enroulement primaire de transformateur (28) est inséré dans celui-ci comprenant des contacts NO (10, 11), NC (8, 9) et central, ainsi que deux circuits RC additionnels dont les résistances sont raccordées au point de raccordement des contacts NC (10, 11) et NO (8, 9) de la première unité de commutation et en outre au contact central du commutateur d'enroulement primaire, les condensateurs des circuits RC additionnels sont raccordés par les premières sorties combinées au point médian de l'enroulement primaire de transformateur (7) et au contact NO (8, 9) du commutateur d'enroulement primaire, et en outre au point de raccordement du condensateur de pontage (12) et à la sortie de l'enroulement primaire (7) du transformateur de régulation et au contact NC (8, 9) du commutateur, respectivement.

3. Le régulateur de tension AC selon la revendication 1, **caractérisé en ce que** l'unité de protection additionnelle (16) se présente sous la forme d'un pont de diode (17) qui est raccordé par la première extrémité d'entrée à la première sortie du déclencheur shunt (22) du disjoncteur d'alimentation bipolaire (21), dont la deuxième sortie est l'entrée de l'unité de protection additionnelle (16), avec un thyristor (18) de l'unité de protection étant raccordé à la sortie du pont de diode, une résistance de limitation (20) et une résistance de circuit de commande (19) étant raccordés en série entre l'anode et une électrode de commande du thyristor (18), le premier contact (23) du disjoncteur tripolaire étant raccordé entre le point de raccordement desdites résistances et la cathode du thyristor, tandis qu'une touche de commande distante (27) est raccordée entre la première sortie du déclencheur shunt (22) du disjoncteur d'alimentation bipolaire (21) et le conducteur neutre.

4. Le régulateur de tension AC selon la revendication 1, **caractérisé en ce qu'**un disjoncteur d'alimentation bipolaire de secours (26) en attente est raccordé entre le conducteur de phase de secteur et la charge (3).

5. Le régulateur de tension AC selon la revendication 1, **caractérisé en ce que** l'unité de commutation et de commande se présente sous la forme d'un capteur de tension (35) comprenant un transformateur abaisseur raccordé en série (36), un pont de diode de capteur (37), un pont résistif déséquilibré (38-41), l'entrée de capteur de tension étant raccordée au secteur commandé, la diagonale du pont résistif déséquilibré (38-41), qui est la sortie de capteur de tension, étant raccordée à l'entrée d'un dispositif de commande et de mesure à deux positions (48) qui est un microcontrôleur programmable composé d'une unité d'entrée (42), dont la sortie est raccordée à l'entrée d'un filtre numérique dont la sortie est raccordée aux entrées de premier et deuxième dispositifs logiques (43, 44) - dispositifs de commande et de mesure à deux positions à réglages programmables, dont les sorties sont raccordées à un premier et un deuxième dispositifs relais (46, 47) possédant le contrôle d'éléments de commutation (49-54) pour des canaux de 1 à n d'une à trois phases.

6. Le régulateur de tension AC selon la revendication 1, **caractérisé en ce qu'**une unité de commande de résistance d'isolement est raccordée à l'entrée du régulateur de tension pour des réseaux neutres isolés et de protection contre les surcharges et les courts-circuits pour des réseaux de tout type.

7. Le régulateur de tension AC selon la revendication 1, **caractérisé en ce qu'**une unité (5) de protection combinée à partir de modes d'urgence, à savoir court-circuit dans le régulateur de tension et la charge, surcharge de courant, déphasage, variation dans la tension d'entrée au-delà de la plage admissible, augmentation de la température dans le bloc, indication acoustique ou optique, est raccordée entre le secteur et le régulateur de tension.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2100837
- RU 2158954
- RU 2237270
- US 20070296390 A1

**Non-patent literature cited in the description**

- **YU.D.ZHOURAVIN ; M.YA.MINTSIS ; I.I.MOUZYCHENKO.** *Power Supply of Aluminum-Electrolysis Rooms,* 2000, 46-47